# EUROPEAN PATENT APPLICATION

(11) **EP 1 043 650 A2**
(43) Date of publication of application: **11.10.2000**
(21) Application number: 00302021.1
(22) Date of filing: 13.03.2000
(51) Int. Cl.: G06F 3/033

(54) **Help display method**

(30) Priority: 09.04.1999 JP 10242499
(71) Applicant: International Business Machines Corporation, Armonk, NY 10504 (US)
(72) Inventor: Mori, Hidetoshi, IBM United Kongdom Limited, Winchester, Hampshire S021 2JN (JP); Kumaki, Atsushi, IBM United Kongdom Limited, Winchester, Hampshire S021 2JN (JP); Sawin, David, IBM United Kongdom Limited, Winchester, Hampshire S021 2JN (JP); Graham, Jon E. IBM United Kongdom Limited, Winchester, Hampshire S021 2JN (JP); Ihde, Steven C. IBM United Kongdom Limited, Winchester, Hampshire S021 2JN (JP)
(74) Representative: Ling, Christopher John

(57) **Abstract**

To provide a help display method for displaying a function and operation method of an operation unit furnished in electronic equipment on a display screen so that a user can easily and quickly know the function and operation method of a specific operation unit.

The frequency for a user to attempt to operate a specific operation unit (centre button) among the operation unit is always counted. Moreover, when the operation frequency of the specific operation unit (centre button) reaches a set value before the user operates another operation unit, a help panel for explaining the function and the operation method of the specific operation unit (centre button) is displayed.

## Description

### Field of the invention

The present invention relates to a help display method. Particularly, the present invention relates to a method for displaying a help panel and a help message for explaining functions and operation methods of equipment operation means including operation buttons of an electronic equipment provided with mouse buttons, keys, and a display device of a computer.

### Background art

Electronic equipment such as a personal computer (PC), a video tape recorder (VTR) (also referred to as video cassette recorder (VCR)), and an audio cassette recorder are respectively provided with equipment operation means such as buttons and keys having various functions. Among these equipment operation means, there are some equipment operation means with operation method which cannot be imagined by a beginner though they can be easily operated by an expert.

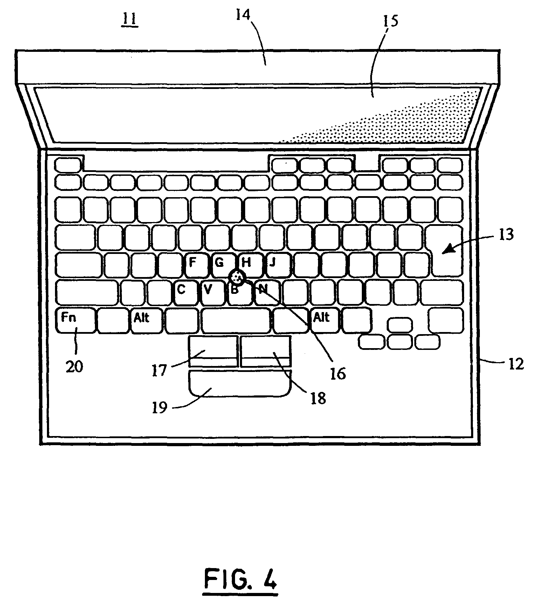

These equipment operation means are described below using a ThinkPad notebook-type personal computer (PC) as an example (ThinkPad is a trademark of International Business Machines Corporation). Figure 4 is an illustration schematically showing a ThinkPad notebook. A ThinkPad notebook 11 comprises a body 12 and an upper lid 14. A keyboard 13 is provided for the upper face of the body 12 and a liquid-crystal display (LCD) 15 is provided for the inner face of the upper lid 14. A mouse serving as a pointing device includes various types such as one-button mouse, two-button mouse, and three-button mouse. Among these mice, the three-button mouse has three buttons such as a left button, a right button, and a third button. The pointing device is a device used to point a position on a display screen. A ThinkPad notebook is also provided with a TrackPoint input device serving as a pointing device functioning similarly to the three-button mouse (TrackPoint is a trademark of international Business Machines Corporation). A TrackPoint device comprises a stick 16 located at the position enclosed by three buttons such as "G" key, "H" key, and "B" key on the keyboard 13 and three buttons such as a left button 17, a right button 18, and a centre button 19 arranged at positions slightly separate from the keyboard 13 on the body 12.

In the case of a ThinkPad notebook, a function for scrolling a document displayed in the window opened on the display screen is assigned to the centre button 19. That is, when moving the stick 16 while the centre button 19 is depressed, the document scrolls. However, even if depressing only the centre button 19, the scroll function does not work. Therefore, it is impossible to expect that a beginner masters functions and operation methods of the centre button 19 of ThinkPad (trademark) through experiential learning.

An example of equipment operation means whose functions and operation method cannot be understood by only independently touching the means is described above by taking as an example the centre button of a ThinkPad notebook-type personal computer (PC). Equipment operation means whose functions and operation method cannot be understood by only independently touching the means, as well as the centre button of a ThinkPad notebook, is provided for many electronic equipment. For example, the video-recording button of a video tape recorder VTR (VCR) does not function even if independently depressing it but it starts video recording by depressing it together with a reproducing button. Moreover, a video-recording standby state is set by depressing the video-recording button and a pause button simultaneously and thereafter, video recording is started by depressing the reproducing button. In this case, no change occurs even if the video-recording button is independently depressed. As a result, it is impossible to expect that the user who operates the VTR (VCR) for the first time experientially masters functions and operation methods of the video-recording button. (In this case, the video-recording button of a VTR (VCR) is taken as an example of equipment operation means which can be hardly mastered through experiences. Even if a VTR (VCR) using an operation method different from the above described for a video-recording button is present, the gist of the above-described explanation is not damaged.)

In addition to the video-recording button of the above VTR (VCR), there are many equipment operation means with operation method that cannot be imagined by a beginner though they can be easily operated by an expert mastering device operations. These equipment operation means make it difficult for a beginner to experientially learn the operation method of a device.

The present invention is made to solve the above problems.

It is an object of the present invention to provide a help display method by which a user can easily and quickly know functions and operation methods of operation means of electronic equipment.

### Disclosure of the invention

The present invention relates to a help display method for displaying functions and operation of operation means provided for electronic equipment on a display screen.

The frequency for a user to try to operate specific operation means among the above operation means is always counted. Then, when the operation frequency of the specific operation means reaches a predetermined value before the user operates other operation means, the help for explaining functions and operation methods of the specific operation means is displayed.

Thereby, the user can easily and quickly master the functions and operation methods of the specific operation means.

### Brief Description of the Drawings

Figure 1 is an illustration showing a personal computer (PC) used for an embodiment of the present invention;
Figure 2 is a flow chart showing operations of an embodiment of the present invention;
Figure 3 is an illustration showing a help panel; and
Figure 4 is an illustration showing a personal computer according to an embodiment of the present invention.

### Detailed Description of the Invention

An embodiment of the present invention is described below.

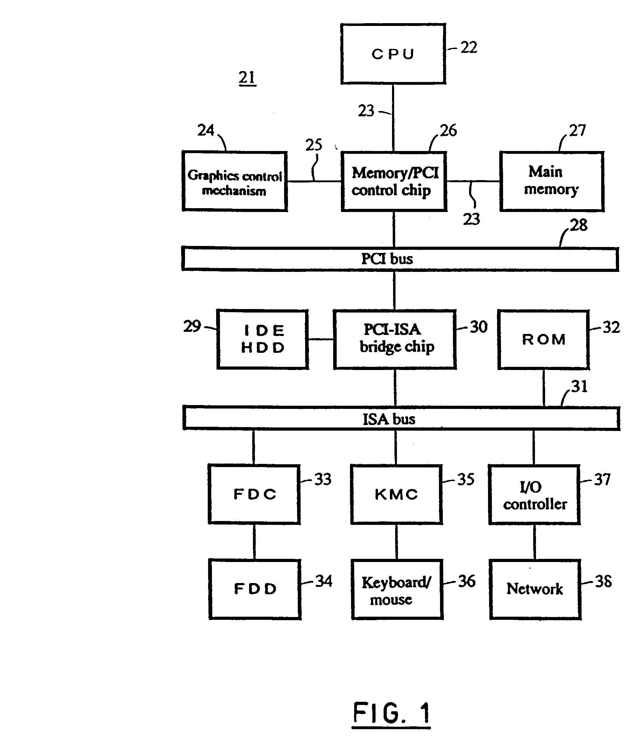

Figure 1 is an illustration showing a personal computer (PC) used for this embodiment. A computer 21 is mainly constituted of a CPU 22, a process bus 23, a graphics display mechanism 24, an AGP bus 25, a memory/PCI control chip 26, a main memory 27, a PCI bus 28, an IDE-type hard disk drive (IDE-HDD) 29, a PCI-ISA bridge chip 30, an ISA bus 31, a ROM 32, a floppy disk drive controller (FDC) 33, a floppy disk drive (FDD) 34, a keyboard/mouse controller (KMC) 35, a keyboard/mouse 36, an I/O (Input/Output) controller 37, and a network 38.

The CPU (Central Processing Unit) 22 can use an Intel x-86-system microprocessor or a PowerPC microprocessor of International Business Machines Corporation or Motorola Inc. USA.

The processor bus 23 is a very-high-speed bus for connecting the CPU 22, memory/PCI control chip 26, and main memory 27 to each other.

The graphics display mechanism 24 controls the output to a display device such as a CRT or liquid-crystal display (LCD). The graphics display mechanism 24 is connected with the memory/PCI control chip 26 by the AGP bus 25. The AGP (Accelerated Graphics Port) bus 25 is used as an exclusive bus for connecting a circuit relating to picture display such as a graphics card by improving a PCI bus.

The memory/PCI control chip 26 serves as an LSI (Large Scale Integrated circuit) for connecting the CPU 22, main memory 27, and PCI bus 28 to each other. The chip 26 is generally referred to as "north bridge".

The main memory 27 is a memory comprising a DRAM (Dynamic Random Access Memory) from or in which the CPU 22 can directly read or write data and which is used for an operating system (OS) or an application program to store a program or data.

The PCI bus 28 is a bus having been used as a standard high-speed bus of a personal computer (PC) in recent years. PCI (Peripheral Component Interconnect) represents a local bus architecture decided by PCI Special Interest Group (a standardising organisation in which one hundred and dozens of companies including Intel Corporation, International Business Machines Corporation, and Compaq Computer Corporation participate).

The ISA bus 31 is a bus for connecting peripheral devices operating at a relatively low speed (floppy disk drive (FDD) 33 and keyboard/mouse 36). ISA (Industry Standard Architecture) represents a bus standard used as an international standard specification on the basis of an extension bus used for the personal computer PC/AT of IBM (International Business Machines Corporation) USA.

The PCI bus 28 and the ISA bus 31 are connected to each other by the PCI-ISA bridge chip 30. This is generally referred to as "south bridge". The PCI-ISA bridge 30 includes an IDE controller for controlling an IDE hard disk drive (IDE-HDD) 29. The IDE (International Device Electronics) is one of interfaces of a hard disk drive. The IDE is standardised by hard disk drive makers at the beginning and then, standardised by ANSI (American National Standards Institute) as an ATA (AT Attachment). A hard disk drive and a CD-ROM drive included in a personal computer (PC) are normally connected by an IDE.

The hard disk drive (IDE-HDD) 29 is used to store programs such as an operating system (OS) and an application and data.

In the case of this embodiment, the ROM 32, floppy disk drive controller (FDC) 33, keyboard/mouse controller (KMC) 35, keyboard/mouse 36, and I/O (Input/Output) controller 37 are connected to the ISA bus 31.

A BIOS is stored in the ROM (Read Only Memory) 32. The BIOS (Basic Input/Output System) is originally used as a program for controlling input/output data to be transferred between an OS or application program and peripheral devices including as a keyboard and display device. However, because an OS has been recently constituted of 32 bits, plug-and-play and power management have been valued instead of the original function. The plug-and-play (PnP) is a function in which a BIOS automatically recognises peripheral devices connected to a computer and sets the devices to an optimum hardware environment in cooperation with an OS. Thereby, a user is released from troublesome setting operations. Standards for power-saving modes such as APM (Advanced Power Management) and ACPI (Advanced Configuration and Power Interface) are decided for power management from the viewpoint of energy saving.

The floppy disk drive controller (FDC) 33 controls the floppy disk drive (FDD) 34.

The keyboard/mouse controller (KMC) 35 controls the keyboard/mouse 36.

The I/O (Input/Output) controller 37 is a connector for the network 38.

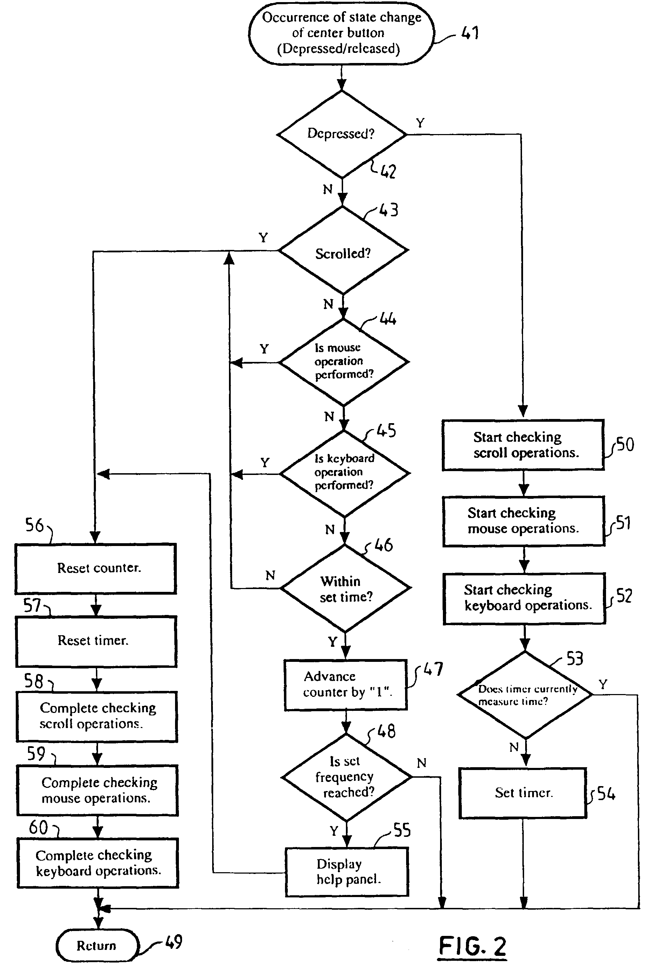

Then, operations of the computer 21 shown in Figure 1 are described below by taking a case in which the computer 21 is provided with a pointing device having the stick 16 and three buttons such as the left button 17, right button 18, and centre button 19 of a TrackPoint device of a ThinkPad notebook shown in Figure 4 as an example by referring to the flow chart shown in Figure 2. In this case, the stick 16, left button 17, right button 18, and centre button 19 are controlled by the keyboard/mouse controller 35.

Referring to Figure 2, if states of the centre button 19 are changed, an interrupt request is output to an operating system (OS). The OS receiving the interrupt request transfers control to an interrupt processing routine from step 41 downward. A state change of the centre button 19 occurs when an event such as depression or release of the centre button 19 occurs.

The interrupt processing routine decides in step 42 whether the event is depression of the centre button 19. The routine advances to step 43 if the decision result is NO (N) but it advances to step 50 when the result is YES (Y).

When a case is assumed in which a user touches the centre button 19 for the first time, the decision in step 42 results in YES (Y). As a result, the routine advances to step 50. In step 50, the routine starts checking whether a document displayed in a window opened on a display screen is scrolled (checking of scroll operations). The scroll operation checking is the checking on whether the stick 16 is moved simultaneously with the centre button 19.

In step 51, the routine starts checking mouse operations. The mouse of this embodiment denotes a pointing device comprising the stick 16, left button 17, right button 18, and centre button 19 shown in Figure 1. The mouse operation checking is the checking on whether the left button 17 is independently depressed, other than the above checking on whether the stick 16 is moved simultaneously with the centre button 19.

In step 52, the routine starts checking key operations. The key operation checking is the checking on whether keys arranged on the keyboard 13 are depressed.

In step 53, the routine decides whether a timer currently measures time. When the decision result is YES (Y), the routine advances to step 49. When the result is NO (N), the routine advances to step 54 where the routine sets the timer to start time measurement. Thereafter, the routine advances to step 49.

In step 49, the routine executes return. That is, the interrupt processing routine completes processing and returns control to the operating system (OS).

Thereafter, when states of the centre button 19 are changed again, the OS transfers control to the interrupt processing routine from step 41 downward. The interrupt processing routine decides in step 42 whether the centre button 19 is depressed. When the decision result is YES (Y), the routine advances to step 50 to execute the above-described steps. When the result is NO (N), the routine advances to step 43. Hereafter, the case of NO (N) is described.

In step 43, the routine decides whether a document displayed in a window opened on a display screen is scrolled. When the decision result is YES (Y), the routine advances to step 56. The processing from step 56 downward shows a processing procedure when a user understands functions and operation methods of the centre button 19 or when a time-out occurs. The processing procedure is described later. Hereafter, the case in which the decision result in step 43 is NO (N), that is, the case in which the document is not scrolled is explained. In this case, the routine advances to step 44.

In step 44, the routine decides whether mouse operations are performed. When the decision result is YES (Y), the routine advances to step 56. The processing from step 56 downward is described later. Hereafter, the case in which the decision result in step 44 is NO (N), that is, the case in which mouse operations are not performed is described. In this case, the routine advances to step 45.

In step 45, the routine decides whether keyboard operations are performed. When the decision result is YES (Y), the routine advances to step 56. The processing from step 56 downward is described later. Hereafter, the case in which the decision result in step 45 is NO (N), that is, the case in which keyboard operations are not performed is described. In this case, the routine advances to step 46.

In step 46, the routine decides whether a value shown by a timer is kept within a preset time. This set time is equal to predetermined several seconds determined in a program as a default value. It is possible to change default values through a control panel. When the above decision result is NO (N), the routine advances to step 56. The processing from step 56 downward is described later. Hereafter, the case in which the decision result in step 46 is YES (Y), that is, the case in which a value shown by the timer is kept within a set time is described. In this case, the routine advances to step 47.

In this step 47, the value of the counter is advanced by "1". The reset value of the counter is set to "0". Then, the value is advanced by "1" only when control is transferred to step 47.

In step 48, the routine decides whether the value of the counter shows a set frequency. As for this set frequency, a default value is set to, for example, three. Then, a case is discussed below in which a user who does not know the operation method of the centre button 19 decides that the centre button 19 has the same functions as the left button 17 of a mouse. The user clicks (depresses and immediately releases) the centre button 19. Because any change does not appear on a display screen, the user double-clicks the centre button 19. In this case, counter values are changed from "0" to "1" by the first clicking and from "1" to "3" by the next double clicking. This is the reason why the counter set frequency is set to three times. It is also possible to set the set frequency so that it can be changed to another through the control panel.

When the decision result in step 48 is NO (N), the routine advances to step 49. In step 49, the routine executes return. That is, the interrupt processing routine completes processing and returns control to the operating system (OS).

When the decision result in step 48 is YES (Y), the routine advances to step 55. In step 55, the routine displays a help panel on the display screen. In this case, the help panel represents the introduction of functions and operation methods of the centre button illustrated and displayed in the form of a window. Moreover, it is possible to form the help panel so that the introduction of functions and operation methods of the centre button are created in accordance with the file format of a specific application program and displayed on a screen where the application is displayed. For example, a help file is created in accordance with the HTML style and displayed in the screen of a browser.

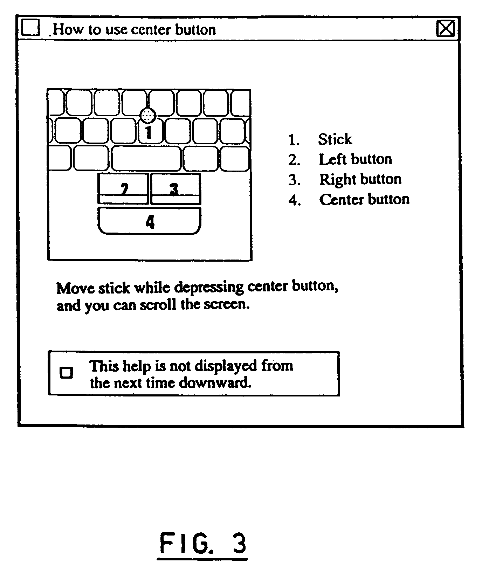

Figure 3 shows a help panel. The help panel shown in Figure 3 displays under the title of "how to use centre button" the arrangement of a stick, disk, left button, right button, and centre button and the operation method of the centre button. That is, a message showing "Move the stick while depressing the centre button, and you can scroll the screen" is displayed. The help panel displays a checking box showing that "the help is not displayed from the next time". A user can decide whether to use the help function of "how to use centre button" in future, depending on whether to check the checking box.

A case of displaying a help panel on a display screen is described above. Instead of the above case, it is also possible to display the help panel in the status bar displayed at the bottom line of the window as a help message. That is, a help message showing "Move the stick while depressing the centre button, and you can scroll the screen" is displayed in the status bar. The help message can take various modes in addition to the above case. For example, it is possible to overwrite a help message on an already-displayed window and display it. Moreover, it is possible to communicate the content of a help message through voice.

Referring to Figure 2, thereafter, the control in step 56 is started.

When decision results in the above steps 43, 44, and 45 are YES (Y), the routine advances to step 56. Also when the decision result in the above step 46 is NO (N), the routine advances to step 56. Then, the routine advances to step 56 also after the above step 55.

In step 56, the routine resets the counter. That is, the routine sets "0" to the counter.

In step 57, the routine resets the timer. That is, the routine stops time measurement of the timer.

In step 58, the routine completes checking of scroll operations.

In step 59, the routine completes checking of mouse operations.

In step 60, the routine completes checking of keyboard operations.

Thereafter, the routine advances to step 49. In step 49, the routine executes return. That is, the interrupt processing routine completes processing and returns control to the operating system (OS).

Operations of the computer 21 shown in Figure 1 are described above by referring to the flow chart shown in Figure 2.

For the above embodiments, a case is described in which a help display method of the present invention is applied to a ThinkPad notebook serving as a personal computer (PC) provided with a TrackPoint device having functions of a three-button mouse. However, the present invention is not restricted to the above case. It is also possible to apply the present invention to operation means having the following features.
(1) Operation means which does not individually function but it functions in accordance with combined operation with other control mechanisms
(2) Operation means which individually functions but to which feedback cannot be easily applied

The operation means corresponding to the above Item (1) includes the centre button of a TrackPoint device . Moreover, a button other than right and left buttons of a mouse having three buttons or more is listed. For example, the third button of a three-button mouse does not function even if it is independently depressed. It is possible to scroll a document by moving the mouse while depressing the third button. Moreover, "Fn" key (key shown by symbol 20 in Figure 4) of a ThinkPad notebook is also included in the above category. "Fn" key does not function even if it is independently depressed but it functions when it is depressed simultaneously with other keys. For example, "Fn" + "F3" transfer a system to a standby state ("Fn" + "F3" represent that "Fn" key and "F3" key are depressed at the same time). "Fn" + "F4" transfer the system to a suspend state.

There are many other keys corresponding to the above Item (1) in addition to "Fn" key. Though "Ctrl" key does not function even if it is independently depressed, it functions as various short-cut keys by combining it with an alphabetical key. The short-cut key is a key obtained by assigning a command executed by being selected from the menu of a window to a single key or the combination of a plurality of keys on a keyboard.

Moreover, a specific function is assigned to the combination of "Ctrl" + "Esc" or "Ctrl" + "Alt" + "Delete".

Moreover, "Shift" key does function even if it is independently depressed similarly to the case of "Ctrl" key. However, by combining "Shift" key with an alphabetical key, it is possible to change characters that can be input. Moreover, it is possible to select a character by "Shift" key + arrow key. Furthermore, it is possible to show functions for selecting a file and for zooming a document by "Shift" key + mouse operations.

Because the above key combinations depend on system setting, the above key operations cannot always be performed on every system.

The third button of a mouse and keys of a keyboard are listed as "other control mechanisms" in the above Item (1). "Other control mechanisms" in the Item (1) include the following in addition to the third button of a mouse and the keys on a keyboard.
a) Devices for moving a mouse pointer, for example, ball of mouse, stick and touch pad of TrackPoint or the like.
b) Mouse buttons, for example, third button.
c) Keys on keyboard, for example, "Fn" key, "Ctrl" key, "Shift" key or the like.
d) Push-button-type switches on keyboard, for example, control button for CD player or the like.
e) Volume adjusters of loudspeaker, for example, dial- and slide-type switches or the like.
f) Contrast adjusters of display, for example, dial- and slide-type switches or the like.

Operation means in the above Item (2) which individually functions but to which feedback cannot be easily applied can have the following modes.
a) Operation means that individually functions but whose change does not easily appear on screen
b) Operation means that individually functions but whose change on screen is small
c) Operation means that individually functions but whose change on screen appears only at the first time
d) Operation means which functions or does not function depending on the type of application
e) Operation means which functions or does not function depending on the state of application.

The following are specific examples of the above operation means.

"Pause" key can temporarily stop a currently-executed program when it is depressed on MS-DOS prompt. That is, "Pause" key can show its function even if it is independently depressed. However, from the change appearing on a screen, it may be difficult to decide whether the program "temporarily stops" or "only seems to temporarily stop because a lot of time is required for operations". Moreover, a change occurs only at the first time by depressing "Pause" key. However, even if the key is continuously depressed many times, no change occurs. Moreover, "Pause" key may not have any function for an application executed in a case other than MS-DOS prompt. Therefore, it can be said that "Pause" key is a key (operation means) to which the feedback showing its functions cannot be easily applied. Furthermore, because the feedback cannot be easily applied to "Pause" key, it is difficult for a user not knowing how to use "Pause" key to experientially learn functions of the key. Therefore, by applying the present invention to "Pause" key, it is possible to conquer the above difficulty.

Furthermore, whether "Home" key or "End" key functions depends on an application. Even if the key functions, the change of the key on a screen serving as the feedback of the key occurs only at the first time similarly to the case of "Pause" key.

Furthermore, whether "Esc" key functions depends on an application. In the case of a general application, it is possible to cancel a dialogue box by depressing "Esc" key. However, this function may not work at all depending on an application. Even an application that must function may function or may not function because it is necessary that a dialogue box is already opened.

Whenever "Insert" key is depressed, input formats are alternately changed between "insertion" and "overwriting". That is, "Insert" key is a key that shows its function even if it is individually depressed. However, there are some applications that do not show any change on a screen even if "Insert" key is depressed. Moreover, even if a change occurs, it is a very small change such as the change of shapes of a cursor. Therefore, a user not knowing how to use "Insert" key at all may overlook the change.

By applying the present invention to the above "Home" key, "End" key, "Esc" key, and "Insert" key, it is possible to solve each problem.

Cases of applying the present invention to a personal computer (PC) are described above. However, the present invention is not restricted to the cases. It is possible to apply the present invention to various electronic equipment. For example, it is considered to apply the present invention to the following electronic equipment.
a) Push buttons of portable telephone.
b) Switches of household electric appliance provided with display device or voice output device including remote control,
   for example, television receiver, video tape recorder (VTR, VCR), audio stereo system or the like.

In the above electronic equipment, the video-recording button of a video tape recorder (VTR, VCR) is taken as an example. The video-recording button does not function even if it is individually depressed but it starts video recording when it is depressed together with a reproducing button. Moreover, there is a button that is set so that, when the video-recording button is depressed together with a pause button, a video-recording standby state is set and then, video recording is started by depressing the reproducing button. In this case, by applying the present invention to the video-recording button, even a user not knowing functions and operation methods of the video-recording button can easily and quickly know functions and operation methods of the video-recording button.

The above-described help display method of the present invention can be formed into a program by using various programming languages (hereafter referred to as help display program).

The help display program is recorded in a computer-readable recording medium. As the recording medium, a storage device to be mounted on a computer system such as a ROM (Read Only Memory), EEPROM (Electrically Erasable Programmable Read Only Memory), or a flash EEPROM, a portable recording medium such as floppy disk (FD), CD-ROM (read only memory using compact disk), or MO (photomagnetic) disk, or an external storage device provided for a server computer connected to a network, can be used.

The help display program recorded in a recording medium is incorporated into a computer in accordance with the following manner. Hereafter, the personal computer 21 shown in Figure 1 is used as an example of a computer.

The incorporating method is divided into two methods when the recording medium is a storage device to be mounted on the computer 21. When the recording medium is a read only storage device such as a ROM, the help display program is written in the ROM in the semiconductor fabrication process. Then, the ROM is mounted on the computer 21 (ROM 32 shown in Figure 1 corresponds to the ROM mounted on the computer 21).

When the recording medium is a portable recording medium, for example, a floppy disk (FD), an FD storing the help display program is set to the FDD 34 to read the help display program recorded in the FD. Then, the help display program is stored in the hard disk drive (IDE-HDD) 29. Or, the help display program is overwritten on the ROM 32. The same is true for the case in which a recording medium storing the help display program is another other portable recording medium such as a CD-ROM, MO disk or the like.

When the recording medium is an external storage device on a network, the help display program stored in the external storage device is downloaded through the network 38. Then, the help display program is kept by storing it in the hard disk drive (IDE-HDD) 29 or overwriting it on the ROM 32 similarly to the above-described case.

According to the present invention, a user can easily and quickly master functions and operation methods of specific operation means because a help display method for displaying functions and operation methods of operation means provided for electronic equipment on a display screen makes it possible to display the help for explaining functions and operation methods of the specific operation means at a proper timing. Particularly, it is possible to detect at a proper timing that a user remains at the stage in which the user cannot perform correct operations and to automatically display the help for correct operations.

## Claims

1. A help display method for displaying a function and operation of operation means (16) furnished in electronic equipment on a display screen (15), comprising the steps of:
a) detecting (41) a change of force applied to the operation means;
c) shifting (47) a value of a counter when the change of the force is detected in step a);
h) deciding (48) whether or not the value of the counter is equal to a predetermined value;
i) returning to step a) if a decision in step h) is negative, and proceeding to a step j) if the decision is affirmative; and
j) displaying (55) the help indicating the function and operation of the operation means on the display screen.

2. A help display method as claimed in claim 1, further comprising the steps of:
b) starting checking whether a function originally provided for the operation means works when it is detected in step a) that a force is applied to the operation means;
d) deciding (43) whether or not a function originally provided for the operation means appears when it is detected in step a) that a force is removed from the operation means; and
e) resetting (56) the counter and returning to step a) when a decision in step d) is affirmative.

3. A help display method as claimed in claim 2 further comprising the steps of:
f) shifting (47) a value of a counter when it is detected in step a) that a force is removed from the operation means;
g) resetting (56, 57) the timer and the counter and returning to step a) when the value of the timer exceeds a set time.

4. A computer program product for performing the steps of any one of claims 1, 2 or 3.

5. Apparatus comprising a CPU, a main memory, an external storage device, operation means, and a display device which are connected to each other by a bus, wherein the external storage device is a recording containing the computer program product of claim 4.
